# EUROPÄISCHE PATENTANMELDUNG

(11) **EP 1 635 538 A1**
(43) Veröffentlichungstag der Anmeldung: **15.03.2006**
(21) Anmeldenummer: 04021805.9
(22) Anmeldetag: 14.09.2004
(51) Int. Cl.: H04M 1/00

(54) **Verfahren zum Suchen und Anzeigen von gespeicherten Daten**

(71) Anmelder: Borsche, Lorenz, 69117 Heidelberg (DE)
(72) Erfinder: Borsche, Lorenz, 69117 Heidelberg (DE)
(74) Vertreter: von Bülow, Tam

(57) **Zusammenfassung**

Das Verfahren zum Suchen von in einer elektronischen Datenbank gespeicherten Datensätzen enthält folgende Schritte:
a) Bilden eines ersten Suchstrings (STRa),
b) Eingeben eines Zeichens (Z),
c) automatisches Bilden eines aktuellen Suchstrings (STRn = STRa + Z) aus dem Zeichen (Z) und einem vorherigen Suchstring (STRa),
d) unmittelbar automatisch darauffolgendes Suchen von Datensätzen, deren Anfangszeichen mit dem aktuellen Suchstring (STRn) übereinstimmen,
e) Anzeigen mindestens einer vorbestimmten Anzahl von Datensätzen, die in Schritt d) gefunden werden,
f) Setzen des ersten Suchstrings (STRa) auf den aktuellen Suchstring (STRa = STRn), wenn mindestens ein übereinstimmender Datensatz gefunden wurde,
g) rekursives Wiederholen der Schritte b) bis f), wobei das zuletzt eingegebene Zeichen (Z) vom aktuellen Suchstring (STRn) automatisch entfernt wird, wenn die Suche nach Schritt d) keinen übereinstimmenden Datensatz erbracht hat und das Verfahren dann nach Schritt b) fortgeführt wird.

## Beschreibung

Die Erfindung bezieht sich auf ein Verfahren zum Suchen und Anzeigen von gespeicherten Daten.

Das Suchen von in elektronischen Datenbanken gespeicherten Daten erfolgt heute in folgender Weise:
Über eine Tastatur wird eine zu suchende Zeichenfolge (sog. Suchstring) eingegeben. Anschließend wird eine vorbestimmte (Such)-Taste (meist eine Funktionstaste) gedrückt, die den Suchvorgang startet. Über einen Suchalgorithmus werden dann alle Datensätze gesucht und zur Anzeige gebracht, deren Inhalt mit dem Suchstring übereinstimmt.

Ist kein Datensatz vorhanden, der mit dem Suchstring übereinstimmt, so erfolgt entweder eine Fehlermeldung oder es werden die auf den Suchstring folgenden nächst höheren Datensätze angezeigt. Die Datensätze liegen dabei in einer geordneten, d.h. normalerweise aufsteigend sortierten Reihenfolge vor, was auch durch einen sog. Index oder eine Index-Datei erfolgen kann.

Hat sich der Benutzer beim Eingeben des Suchstrings "vertippt", so muß er den Suchstring entweder komplett neu eingeben oder zumindest das letzte Zeichen des Suchstrings durch Drücken einer vorbestimmten (Lösch)-Taste löschen und dann wiederum einen Suchvorgang durch erneutes Drücken der vorbestimmten (Such)-Taste starten.

Dieses Verfahren ist in der Praxis mühsam und lästig.

Es ist auch schon bekannt, nach Eingabe jedes Zeichens eines Suchstrings automatisch einen Suchvorgang auszulösen, ohne daß eine spezielle "Suchtaste" gedrückt werden muß. Auch hier werden jedoch, wenn kein mit dem Suchstring übereinstimmender Datensatz gefunden wird, entweder die auf den Suchstring folgenden, nächst höheren Datensätze angezeigt oder es erfolgt eine leere Anzeige, was dem Benutzer signalisiert, daß kein übereinstimmender Datensatz gefunden wurde.

In Datenbanken gespeicherte Daten sind üblicherweise zu Datensätzen organisiert, wobei jeder Datensatz mehrere Felder hat, von denen einige oder alle wiederum über eine Index-Datei sortiert sind. Der Benutzer muß bei einer Suche vorher auswählen, in welchem Feld er suchen will. Es wird dann die dem entsprechenden Feld zugeordnete Index-Datei aktiviert und die Suche findet nur in dem ausgewählten Feld statt. Auch dies ist in der Praxis mühsam und damit lästig, da der Benutzer häufig nicht weiß, in welchem Feld einer Datenbank der gesuchte Begriff gespeichert ist.

Aufgabe der Erfindung ist es, ein Verfahren zum Suchen und Anzeigen von gespeicherten Daten zu schaffen, das einfacher durchzuführen ist und schneller zu gesuchten Datensätzen führt.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der Erfindung liegt darin, daß der Suchstring automatisch um das zuletzt eingegebene Zeichen gekürzt wird, wenn die Suche keinen übereinstimmenden Datensatz gefunden hat.

Nach einer Weiterbildung der Erfindung wird die Suche hierarchisch über mehrere Felder bzw. Indizes durchgeführt. Wird beispielsweise im ersten Feld (Index 1) kein übereinstimmender Datensatz gefunden, so wird die Suche automatisch in einem zweiten Feld (Index 2) durchgeführt. Wird auch dort kein übereinstimmender Datensatz gefunden, so wird auf den nächsten Index (Index n) umgeschaltet usw., bis entweder ein übereinstimmender Datensatz gefunden wurde oder alle vorgegebenen Felder (Indizes) ergebnislos durchsucht wurden.

Nach einer anderen Weiterbildung der Erfindung können jeder alphanumerischen Taste auch mehrere Zeichen zugeordnet sein, beispielsweise nach dem T9-Standard oder "Vanity-Code", der bei Telefon- und Mobilfunktelefon-Tastaturen angewandt wird. Dort sind z.B. der Taste "2" die Zeichen "2, a, b, c" zugeordnet. Wird in diesem Standard gesucht, so werden nach Drücken einer entsprechenden Taste mehrere Suchvorgänge ausgelöst, beispielsweise nach Drücken der Taste "2" werden Suchvorgänge für Datensätze, die mit "2", "a", "b" oder "c" beginnen, durchgeführt.

Nach einer Weiterbildung der Erfindung wird jedem Feld ein zusätzliches Feld zugeordnet, in welchem die Daten entsprechend dem T9-Code abgespeichert sind. So wird einem Namensfeld ein T9-Namensfeld zugeordnet, in welchem der Name als T9-codierte Ziffern gespeichert ist. Beispielsweise wird der Name "Springsteen" dann als "7, 7, 7, 4, 6, 4, 7, 8, 3, 3, 6" umcodiert in dem T9-Namensfeld gespeichert und die Suche findet jeweils nur noch in den zugeordneten T9-Feldern statt.

Die Erfindung ist vielfältig einsetzbar, angefangen von Suchen von gespeicherten Daten auf einem PC, einer Internet-Suchmaschine, Suchen, Anzeigen und Herunterladen von Daten, Audiodateien, Videodateien u.ä. von Datenbanken über Mobilfunk, Telefon oder Internet, Suchen, Anzeigen und Verwenden von Telefonbucheinträgen in gespeicherten Adressdateien von Telefonen etc.

Im folgenden wird die Erfindung anhand eines Ausführungsbeispiels im Zusammenhang mit der Zeichnung ausführlicher beschrieben. Es zeigt:
- Fig. 1: ein Flußdiagramm zur Erläuterung des Verfahrens nach einem ersten Ausführungsbeispiel der Erfindung;
- Fig. 2: ein Flußdiagramm zur Erläuterung des Verfahrens nach einem zweiten Ausführungsbeispiel der Erfindung; und
- Fig. 3: ein Flußdiagramm zur Erläuterung des Verfahrens nach einem dritten Ausführungsbeispiel der Erfindung.

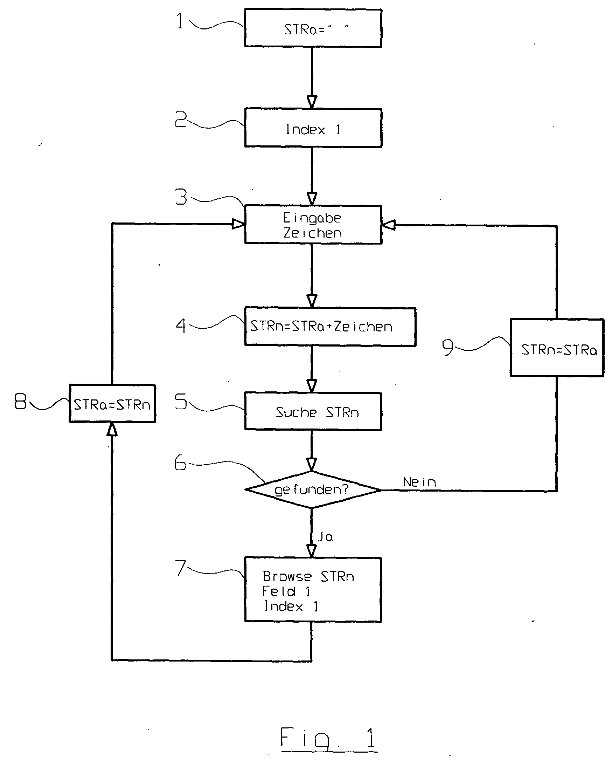

Zunächst wird auf Fig. 1 Bezug genommen. Im Schritt 1 wird ein leerer Suchstring (STRa) definiert. Im Schritt 2 wird der erste Index (Index 1) aktiviert. Sodann wartet das Verfahren im Schritt 3 auf die Eingabe eines Zeichens durch Drücken einer Taste einer Tastatur. Ist dies erfolgt, so wird im Schritt 4 ein aktueller Suchstring STRn definiert als STRa plus Zeichen der gedrückten Taste. Im anschließenden Schritt 5 wird in den dem Index 1 zugeordneten Feldern nach Einträgen gesucht, deren erstes Zeichen mit dem Suchstring STRn übereinstimmt. Wurde mindestens eine Übereinstimmung gefunden (Schritt 6), so werden alle oder eine vorbestimmte Anzahl von Datensätzen, die die Übereinstimmung aufweisen, im Schritt 7 angezeigt und der Anfangs-Suchstring STRa wird auf den aktuellen Suchstring STRn gesetzt. Die Anzeige nur einer vorbestimmten Anzahl von Datensätzen kann so festgelegt sein, daß beim ersten Suchvorgang nur ein oder wenige übereinstimmende Datensätze angezeigt werden, was das Verfahren beschleunigt, da nicht alle übereinstimmenden Datensätze angezeigt werden müssen. Für den Anwender ist es ausreichend, nur einen oder wenige Datensätze angezeigt zu bekommen, um zu wissen, daß überhaupt übereinstimmende Datensätze vorhanden sind. Auch kann vorgesehen sein, daß die Anzahl der angezeigten übereinstimmenden Datensätze bei jedem aufeinanderfolgenden Suchvorgang erhöht wird. Das Verfahren geht dann zu Schritt 3 zurück und wartet auf eine weitere Eingabe eines Zeichens, worauf dann wiederum im Schritt 4 der aktuelle Suchstring STRn um das neu eingegebene Zeichen erweitert wird. Diese Schleife wird so oft wiederholt, bis der Benutzer abbricht oder bis kein übereinstimmender Datensatz mehr gefunden wird.

Wird keine Übereinstimmung mit dem aktuellen Suchstring STRn gefunden, so wird nach einer ersten Grundvariante der Erfindung im Schritt 9 der aktuelle Suchstring STRn auf den vorhergehenden Suchstring STRa zurückgesetzt, d.h. das zuletzt eingegebene Zeichen wird gelöscht und das Verfahren geht zu Schritt 3 zurück, wo auf die Eingabe eines neuen Zeichens gewartet wird. An einer eventuell schon vorhandenen Anzeige vorheriger Suchschritte gemäß Schritt 7 wird nichts geändert. Es muß auch keine Funktionstaste, Löschtaste o.ä. betätigt werden. Vielmehr erfolgt die Löschung des zuletzt eingegebenen Zeichens gemäß Schritt 9 vollautomatisch.

Wird im Schritt 3 ein Sonderzeichen eingegeben, insbesondere das Zeichen "&" oder die "Leertaste", so wird dies als "UND"-Verknüpfung interpretiert und der Suchvorgang wird auf alle Datensätze ausgedehnt, die alle "UND"-verknüpften Suchstrings enthalten. Die einzelnen Suchstrings können auch in unterschiedlichen Feldern der Datensätze enthalten sein, wobei dann für eine beschleunigte Suche der Index umgeschaltet wird. Dies ist beispielsweise dann nützlich, wenn bestimmte Dateien eines bekannten Typs auf einem Computer gesucht werden, beispielsweise eine Datei namens "Musiktitel.pdf". Der Benutzer gibt dann beispielsweise ein "pdf m". Der Suchvorgang wird dann zunächst auf alle Dateien mit der "Dateierweiterung" pdf eingeschränkt und dann darunter Dateien gesucht, die mit "m" anfangen.

Der bisher beschriebene Vorgang wird im Zusammenhang mit einer Beispielsdatenbank von Datensätzen für Musiktitel gemäß nachfolgender **Tabelle 1** erläutert. Diese Datenbank hat zunächst drei Felder, die "Titel", "Interpret" und "Album" von Musiktiteln enthalten. Zusätzlich enthält sie T9-Codes für diese Felder und rein zur leichteren Verständlichkeit der vorliegenden Beschreibung Felder (R1, R2, R3) der jeweils aufsteigend sortierten Reihenfolge dieser Felder.

**Tabelle 1**

| Titel | R 1 | T9 Titel | Interpret | R2 | T9 Interpret | Album | R3 | T9 Album |
|---|---|---|---|---|---|---|---|---|
| Adam In Chains | 1 | 2326 46 242467 | Billy Idol | 6 | 24559 4365 | Cyberpunk | 2 | 292377865 |
| Aeroplane | 2 | 237675263 | Bjork | 42 | 25675 | Debut | 29 | 33288 |
| Ain't No Half Steppin' | 3 | 2468664253 783774 | Christy Baron | 94 | 2474789 22766 | steppin' | 59 | 7837746 |
| Aint No Sunshine | 4 | 246866 78674463 | Christy Baron | 68 | 2474789 22766 | I Thought AboutYou | 50 | 48468448 22688968 |
| Aint No Sunshine (2) | 5 | 2468 66 78674463 (2) | Christy Baron | 67 | 2474789 22766 | I Thought About You | 34 | 4 8468448 22688968 |
| Big time sensuality | 6 | 244 8463 7367825489 | Bjork | 40 | 25675 | Debut | 30 | 33288 |
| Blue highway | 7 | 2583 4444929 | Billy Idol | 32 | 24559 4365 | VH1 Storytellers | 96 | 841 786798355 377 |
| Body And Soul | 8 | 2639 263 7685 | Christy Baron | 76 | 2474789 22766 | I Thought About You | 43 | 48468448 22688 968 |
| Body And Soul (2) | 9 | 2639 263 7685 (2) | Christy Baron | 75 | 2474789 22766 | I Thought About You | 42 | 48468448 22688968 |
| | | | | | | | | |
| | | | | | | | | |
| Closing Manifesto | 10 | 2567464 626433786 | Billy Idol | 20 | 24559 4365 | Cyberpunk | 20 | 292377865 |
| Columbus | 11 | 26586287 | Christy Baron | 74 | 2474789 22766 | I Thought About You | 41 | 48468448 22688968 |
| Columbus (2) | 12 | 26586287 (2) | Christy Baron | 73 | 2474789 22766 | I Thought About You | 40 | 48468448 22688968 |
| Come to me | 13 | 2663 86 63 | Bjork | 43 | 25675 | Debut | 28 | 33288 |
| Concrete Kingdom | 14 | 26627383 5464366 | Billy Idol | 14 | 24559 4365 | Cyberpunk | 19 | 292377865 |
| Countin' On A Miracle | 15 | 2686846 66 2 647225 | Bruce Springsteen | 50 | 27823 77746478336 | The Rising | 78 | 843 747464 |
| Cradle of love | 16 | 272353 63 5683 | Billy Idol | 21 | 24559 4365 | VH1 Storytellers | 92 | 841 786798355 377 |
| Crying | 17 | 279464 | Bjork | 36 | 25675 | Debut | 26 | 33288 |
| Dancing with myself | 18 | 3262464 9484 697353 | Billy Idol | 30 | 24559 4365 | VH1 Storytellers | 86 | 841 786798355 377 |
| Delays On The Downtown 6 | 19 | 335297 66 843 36968696 6 | Christy Baron | 90 | 2474789 22766 | steppin' | 67 | 7837746 |
| Don't need a gun | 20 | 3668 6333 2 486 | Billy Idol | 22 | 24559 4365 | VH1 Storytellers | 93 | 841 786798355 377 |
| Empty Sky | 21 | 36789 759 | Bruce Springsteen | 51 | 27823 77746478336 | The Rising | 81 | 843 747464 |
| Eyes without a face | 22 | 3937 9484688 2 3223 | Billy Idol | 29 | 24559 4365 | VH1 Storytellers | 85 | 841 786798355 377 |
| Flesh for fantasy | 23 | 35374367 3268279 | Billy Idol | 23 | 24559 4365 | VH1 Storytellers | 83 | 841 786798355 377 |
| Further On (Up The Road) | 24 | 3878437 66 (87 843 7 | Bruce Springsteen | 54 | 27823 77746478336 | The Rising | 77 | 843 747464 |
| Got To Get Into My Life | 25 | 468 86 438 4686 69 5433 | Christy Baron | 62 | 2474789 22766 | I Thought About You | 54 | 4 8468448 22688968 |
| Got To Get Into My Life (2) | 26 | 468 86 438 4686695433 (2) | Christy Baron | 61 | 2474789 22766 | I Thought About You | 52 | 48468448 22688968 |
| Heroin | 27 | 437646 | Billy Idol | 11 | 24559 4365 | Cyberpunk | 10 | 292377865 |
| Human Behaviour | 28 | 48626 234284687 | Bjork | 35 | 25675 | Debut | 22 | 33288 |
| I Thought About You | 29 | 48468448 22688968 | Christy Baron | 82 | 2474789 22766 | I Thought About You | 47 | 48468448 22688 968 |
| I Thought About You (2) | 30 | 48468448 22688 968 (2) | Christy Baron | 81 | 2474789 22766 | I Thought About You | 51 | 48468448 22688 968 |
| If It's Magic | 31 | 43 487 62442 | Christy Baron | 84 | 2474789 22766 | I Thought About You | 55 | 48468448 22688 968 |
| If It's Magic (2) | 32 | 43 487 62442 (2) | Christy Baron | 83 | 2474789 22766 | I Thought About You | 53 | 48468448 22688968 |
| Into The Fire | 33 | 4686 843 3473 | Bruce Springsteen | 47 | 27823 77746478336 | The Rising | 75 | 843 747464 |
| Is Love Enough | 34 | 47 5683 366844 | Christy Baron | 93 | 2474789 22766 | steppin' | 60 | 7837746 |
| Kiss me deadly | 35 | 5477 63 332359 | Billy Idol | 28 | 24559 4365 | VH1 Storytellers | 88 | 841 786798355 377 |
| Knocks Me Of My Feed | 36 | 5662576363 693333 | Christy Baron | 66 | 2474789 22766 | I Thought About You | 48 | 48468448 22688968 |
| Knocks Me Of My Feed (2) | 37 | 5662576363 69 3333 (2) | Christy Baron | 65 | 2474789 22766 | I Thought About You | 49 | 48468448 22688968 |
| Let's Be Friends (Skin To Skin) | 38 | 5387 23 3743637 (7546 86 7546) | Bruce Springsteen | 53 | 27823 77746478336 | The Rising | 79 | 843 747464 |
| Like someone in love | 39 | 5453 7663663 46 5683 | Bjork | 39 | 25675 | Debut | 25 | 33288 |
| Lonesome Day | 40 | 56637663 329 | Bruce Springsteen | 46 | 27823 77746478336 | The Rising | 82 | 843 747464 |
| Love Labours On | 41 | 5683 5226877 66 | Billy Idol | 10 | 24559 4365 | Cyberpunk | 17 | 292377865 |
| L.A. woman | 42 | 5296626 | Billy Idol | 34 | 24559 4365 | VH1 Storytellers | 87 | 841 786798355 377 |
| Mary's Place | 43 | 62797 75223 | Bruce Springsteen | 56 | 27823 77746478336 | The Rising | 76 | 843 747464 |
| Mercy Street | 44 | 63729 787338 | Christy Baron | 86 | 2474789 22766 | steppin' | 61 | 7837746 |
| Misty | 45 | 64789 | Christy Baron | 72 | 2474789 22766 | I Thought About You | 44 | 48468448 22688968 |
| Misty (2) | 46 | 64789 (2) | Christy Baron | 71 | 2474789 22766 | I Thought About You | 38 | 48468448 22688 968 |
| Mony mony | 47 | 66696669 | Billy Idol | 33 | 24559 4365 | VH1 Storytellers | 91 | 841 786798355 377 |
| Mother Dawn | 48 | 668437 3296 | Billy Idol | 19 | 24559 4365 | Cyberpunk | 18 | 292377865 |
| My City Of Ruins | 49 | 69248963 78467 | Bruce Springsteen | 60 | 27823 77746478336 | The Rising | 74 | 843 747464 |
| Neuromancer | 50 | 63876626237 | Billy Idol | 7 | 24559 4365 | Cyberpunk | 3 | 292377865 |
| Night And Day | 51 | 64448 263 329 | Christy Baron | 70 | 2474789 22766 | I Thought About You | 33 | 48468448 22688968 |
| Night And Day (2) | 52 | 64448 263 329 (2) | Christy Baron | 69 | 2474789 22766 | I Thought About You | 32 | 48468448 22688968 |
| Nite And Day | 53 | 6483 263 329 | Christy Baron | 96 | 2474789 22766 | steppin' | 66 | 7837746 |
| Nothing Man | 54 | 6684464 626 | Bruce Springsteen | 49 | 27823 77746478336 | The Rising | 80 | 843 747464 |
| One Day | 55 | 663 329 | Bjork | 41 | 25675 | Debut | 24 | 33288 |
| Opening Manifesto | 56 | 6736464 626433786 | Billy Idol | 1 | 24559 4365 | Cyberpunk | 4 | 292377865 |
| Paradise | 57 | 72723473 | Bruce Springsteen | 59 | 27823 77746478336 | The Rising | 72 | 843 747464 |
| Power Junkie | 58 | 76937 586543 | Billy Idol | 8 | 24559 4365 | Cyberpunk | 5 | 292377865 |
| Ready steady go | 59 | 73239 783239 46 | Billy Idol | 31 | 24559 4365 | VH1 Storytellers | 95 | 841 786798355 377 |
| Rebel yell | 60 | 73235 9355 | Billy Idol | 27 | 24559 4365 | VH1 Storytellers | 90 | 841 786798355 377 |

Diese drei Felder sind jeweils indiziert, wobei das Feld R1 die sortierte Reihenfolge des Feldes "Titel", das Feld R2 die sortierte Reihenfolge des Feldes "Interpret" und das Feld R3 die sortierte Reihenfolge des Feldes "Album" bezeichnet. Bei Aktivierung des dem Feld "Titel" zugeordneten Index', der hier der Index 1 sei, erscheint die Tabelle nach dem Titel sortiert, und zwar in aufsteigender Reihenfolge, wie in Tabelle 1 angegeben.

Es sei jetzt angenommen, der Benutzer suche den Musiktitel "Nite and Day". Nach Starten des Verfahrens (Schritte 1 und 2) gibt er die Taste "N" in Schritt 3 ein. Der Suchstring STRn ist somit "N" und im Schritt 5 wird nach Datensätzen gesucht, die im Index 1 (Titel) als ersten Buchstaben den Buchstaben "N" haben. Es werden damit die Datensätze 50 bis 54 gemäß Tabelle 1 gefunden und zur Anzeige gebracht. Im Schritt 8 wird der Anfangs-Suchstring auf "N" gesetzt und das Verfahren geht zu Schritt 3 zurück. Im nächsten Schritt gibt der Benutzer das Zeichen "i" ein. Der Suchstring STRn wird dann zu "Ni" gesetzt. Die anschließende Suche ergibt dann nur noch die Datensätze 51, 52 und 53, die wiederum zur Anzeige gebracht werden. Im Schritt 8 wird der Anfangssuchstring STRa auf "Ni" gesetzt. Beim nächsten Durchlauf (Schritt 3) gibt der Benutzer das Zeichen "t" ein. Der Suchstring STRn lautet dann "Nit", mit dem dann nur noch der Datensatz 53 gefunden wird.

Da dann nur noch ein Datensatz angezeigt wird, sieht der Benutzer auch sofort, daß keine weiteren Suchschritte mehr erforderlich sind.

Gibt der Benutzer bei der Eingabe des dritten Zeichens fälschlicherweise statt dem Zeichen "t" ein anderes Zeichen ein, wie z.B. das Zeichen "z", das auf der Tastatur unmittelbar neben dem "t" liegt, so wird für STRn = "Niz" im Schritt 6 keine Übereinstimmung gefunden und im Schritt 9 der Suchstring von "Niz" wieder auf "Ni" zurückgesetzt. Der Benutzer erkennt dadurch, daß es zu der Zeichenfolge "Niz" keine Übereinstimmung gibt.

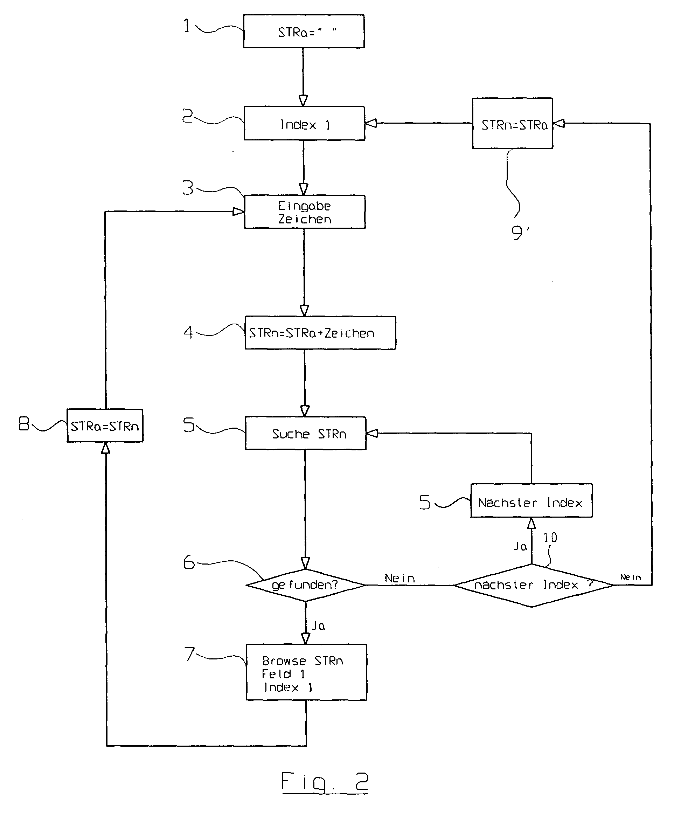

Nach einer in Fig. 2 dargestellten Weiterbildung der Erfindung wird nach Schritt 6, wenn keine Übereinstimmung gefunden wurde, überprüft, ob auf einen weiteren, z.B. einen zweiten Index, umgeschaltet werden soll, was, je nach Art der zu durchsuchenden Datenbank, fest vorgegeben sein kann oder vom Benutzer einstellbar ist. Soll nicht auf einen zweiten Index umgeschaltet werden, so wird im Schritt 9' der aktuelle Suchstring STRn wieder auf den Anfangssuchstring STRa zurückgesetzt. Soll dagegen die Suche auch auf weitere Felder, wie z.B. den "Interpreten", umgeschaltet werden, so wird nach der eventuellen Prüfung des Schrittes 10 im Schritt 11 der nächste, z.B. der zweite Index, aktiviert und im Schritt 5 in den zweiten Suchfeldern nach Übereinstimmungen mit STRn gesucht. Werden hier übereinstimmende Datensätze gefunden, werden diese im Schritt 7 zur Anzeige gebracht. Die Schleife der Schritte 7, 8, 3, 4, 5, 6 wird so lange durchlaufen, bis der Benutzer abbricht oder keine übereinstimmenden Datensätze gefunden werden. In letzterem Fall wird denn ggf. über die Schritte 10 und 11 weitere Felder bzw. Indizes durchsucht.

Generell ist dieses Verfahren auf beliebig viele Suchfelder erweiterbar, die wahlweise aber auch begrenzt werden können. Wird im Schritt 10 eine Weiterschaltung auf einen dritten Index abgelehnt, so wird im Schritt 9' der Suchstring wieder auf den vorigen Suchstring zurückgesetzt und das Verfahren geht zurück zu Schritt 2, d.h. es wird wieder der erste Index aktiviert.

Es sei nun angenommen, der Benutzer suche nach dem Interpreten "Chrystine Barron". Der erste Suchstring STRn = "C" führt zur Anzeige der Datensätze 11 bis 17. Der zweite Suchstring STR2 = "Ch" führt unter den Feldern "Titel" zu keinem Ergebnis. In Schritt 6 wird damit kein Treffer angezeigt, worauf in den Schritten 10 und 11 auf den zweiten Index, d.h. die Felder "Interpret", umgeschaltet wird. Die Suche unter dem zweiten Index mit dem Suchstring "Ch" führt im Schritt 5 zu den Datensätzen 3, 4, 5, 8, 9, 11, 12, 19 usw., d.h. es werden alle Datensätze mit dem Interpreten, der mit "Ch" beginnt, angezeigt.

In ähnlicher Weise könnte dann auch noch auf einen dritten Index umgeschaltet werden usw.

Werden nach einer Suche mehrere Datensätze angezeigt, so kann der Benutzer über die sog. Cursor-Tasten die einzelnen Datensätze "durchblättern" und durch eine weitere Taste, wie z.B. die "Enter"-Taste, einen speziellen Datensatz auswählen.

Allgemein ist darauf hinzuweisen, daß das Verfahren nach der Erfindung für jegliche strukturierte Datenbanken anwendbar ist. So könnte beispielsweise eine Datenbank auch Buchtitel, Autor, Verlag, ISBN-Nr. etc. enthalten oder Adressen mit Name, Vorname, Straße, Ort, Telefon-Nr. usw.

Auch ist das Verfahren auf numerische Tastaturen, wie z.B. Telefon- oder Mobilfunk-Tastaturen, nach dem T9-Code anwendbar, wo den einzelnen Zifferntasten auch Buchstaben zugeordnet sind. Nach dem T9-Code gilt folgende Zuordnung:

| **Taste** | **Buchstaben** |
|---|---|
| 2 | ABC |
| 3 | DEF |
| 4 | GHI |
| 5 | JKL |
| 6 | MNO |
| 7 | PQRS |
| 8 | TUV |
| 9 | WXYZ |

Für das Verfahren nach der Erfindung ergeben sich zwei Möglichkeiten:
Die erste Möglichkeit besteht darin, in der Datenbank jedem alphanumerischen Feld ein numerisches Feld mit dem T9-Code (auch "Vanity-Code" genannt) zuzuordnen, in dem der Inhalt des Feldes in rein numerischer Codierung gespeichert ist. Die "Vanity"-Felder sind dann indexiert und die Suche erfolgt nur in diesen Feldern "T9-Titel", "T9-Interpret" und "T9-Album". Bei erfolgreicher Suche werden aber selbstverständlich dann wiederum die alphanumerischen Felder zur Anzeige gebracht. Es sei angenommen, der Benutzer suche wiederum den Musiktitel "Nite and Day", jedoch mit einer rein numerischen Tastatur. Es wird dann der Index "T9-Titel" aktiviert und die Datenbank ist dann nach diesem Feld aufsteigend sortiert. Für den ersten Buchstaben "N" wird die Taste "6" gedrückt, worauf die Datensätze 43, 44, 50, 51, 52, 45, 46, 53, 55, 47, 48, 54, 56 und 49 angezeigt werden, d.h. alle Datensätze, die in der Spalte "T9-Titel" mit einer "6" beginnen. Als nächstes wird das Zeichen "4" für den Buchstaben "i" eingegeben, worauf nur noch die Datensätze 51, 52, 45, 46 und 53 angezeigt werden, unter denen auch schon der gewünschte Datensatz 53 enthalten ist. Ggf. gibt der Benutzer dann noch das Zeichen "8" für "t" ein und als einziger Treffer wird nur noch der Datensatz 53 angezeigt. Auch hier kommt man also mit nur drei Suchschritten wieder zum gewünschten Titel.

Die zweite Variante besteht darin, nach Eingabe eines numerischen Zeichens im Schritt 3 in einem Codeumsetzer parallel oder sukzessive mehrere Suchstrings zu erzeugen und die Suche dann nach diesen Suchstrings durchzuführen, wobei dann alle positiven Suchergebnisse angezeigt werden.

Es sei wiederum angenommen, der Benutzer suche mit einer numerischen Tastatur den Musiktitel "Nite and Day". Er drückt die Ziffer "6" für "N" (was aber auch "M" und "O" bedeuten kann), worauf die Suchstrings STR1 = "M", STR2 = "N" und STR3 = "O" gebildet werden. In drei Durchläufen werden dann alle Datensätze selektiert, die mit "M", "N" oder "O" anfangen, d.h. die Datensätze 43, 44, 50, 51, 53, 52, 45, 46, 55, 47, 48, 54, 56 und 49. Als nächste Eingabe erfolgt die Taste "4" für den Buchstaben "i", womit sich folgende Suchstrings ergeben:
Mg, Mh, Mi; Ng, Nh, Ni; Og, Oh, Oi.

Hierzu werden die Datensätze 51, 53, 52, 45 und 46 gefunden. Gültige Suchstrings sind somit nur noch "Mi" und "Ni", während die Suchstrings "Mg", "Mh"; "Ng", "Nh" und "Og", "Oh", "Oi" gelöscht werden können.

Für den dritten Buchstaben "t" wird sodann die Taste "8" gedrückt, womit aus den noch gültigen alten Suchstrings "Mi" und "Ni" die Suchstrings "Mit", "Miu", "Miv"; "Nit, "Niu" und "Niv" gebildet werden. Damit wird nur noch der Datensatz 53 gefunden, der dem gewünschten Titel entspricht.

Eine andere Weiterbildung der Erfindung sieht vor, daß in der Datenbank zusätzlich aufrufbare Funktionen des jeweiligen Gerätes, wie z.B. eines Personal Computers, eines Mobilfunktelefons etc., gespeichert sind und über die oben beschriebene Suche nicht nur aufgefunden sondern auch aktiviert werden können. Beispielsweise kann bei einem Mobilfunktelefon in der suchbaren Adressliste auch die Funktion "Wecker" implementiert sein. Durch Eingabe der Tastenfolge "9 (W)", "3 (E)" werden die Einträge "Wecker, Konstantin" und "Wecker (Funk)" angezeigt. Wird letzterer mit dem Cursor dann angesteuert, wird die Weck-Funktion des Mobilfunktelefons aktiviert.

In ähnlicher Weise könnte bei einem Personal Computer die Datenbank alle Dateien, einschl. ausführbare Programme enthalten, die auf diese Weise gesucht und aktiviert werden können.

Selbstverständlich können einzelnen Sondertasten bestimmte Funktionen zugeordnet werden. So kann beispielsweise der "Back-space"-Taste die Löschfunktion für einzelne Buchstaben zugeordnet werden. Es kann in der Praxis auch passieren, daß ein falsch eingegebenes Zeichen Treffer liefert. Durch Löschen des letzten Zeichens springt die Suche wieder auf das vorherige Suchergebnis zurück. Mit den sog. Cursor-Tasten kann man in den angezeigten Datensätzen auf- und abwärts gehen. Der Taste "Cursor rechts" kann die Funktion zugewiesen werden, vom aktuellen Datensatz auf den nächstfolgenden, nicht identischen Buchstaben eines Suchstrings zu springen, was dann sinnvoll ist, wenn viele Datensätze über mehrere Anfangszeichen hinweg identisch sind. Beispielsweise gibt es im Buchbereich viele Titel, die mit übereinstimmenden Zeichenfolgen beginnen, wie z.B. "Langenscheidts Universal Wörterbuch ...". Die eigentlich relevante und differierende Information, nämlich Englisch, Französisch, ..., Rumänisch, Russisch usw., folgt erst in späteren Suchschritten. Es sei angenommen, es werde das Wörterbuch "Russisch" gesucht, so müßte man in diesem Beispiel den Suchstring "Langenscheidts Universal Wörterbuch Rus" eingeben, um zu diesem Datensatz zu gelangen. Mit der genannten Taste "Cursor rechts" gelangt man deutlich schneller zu diesem Titel. Es sei angenommen, mit vier Tastendrücken sei man bis zum ersten "LANGenscheidt" vorgedrungen. Um von dort bis zum "Russisch" zu gelangen, wird durch Drücken der Taste "Cursor rechts" die komplette übereinstimmende Zeichenfolge, also hier "Langenscheidts Universal Wörterbuch", in den Suchstring übernommen, so daß man anschließend nur noch die Taste "R" drücken muß, um zu "Rumänisch" und "Russisch" zu kommen.

Weiter ist es zweckmäßig, alle Sonderzeichen, wie Apostroph, Akzente etc., auszufiltern.

Ebenso werden Leerzeichen ausgefiltert, wobei man der Leertaste wiederum eine Sonderfunktion zuweisen kann, nämlich im Suchstring bis zum nächsten Leerzeichen vorzuspringen, also vom angezeigten Datensatz alle Zeichen bis zum nächstfolgenden Leerzeichen in den Suchstring zu übernehmen. Im obigen Beispiel würde nach Drücken der Tastenfolge "LANG + Leertaste" der Suchstring auf "Langenscheidts" ergänzt, nach zweimaligem Drücken der Leertaste auf "Langenscheidts Universal Wörterbuch".

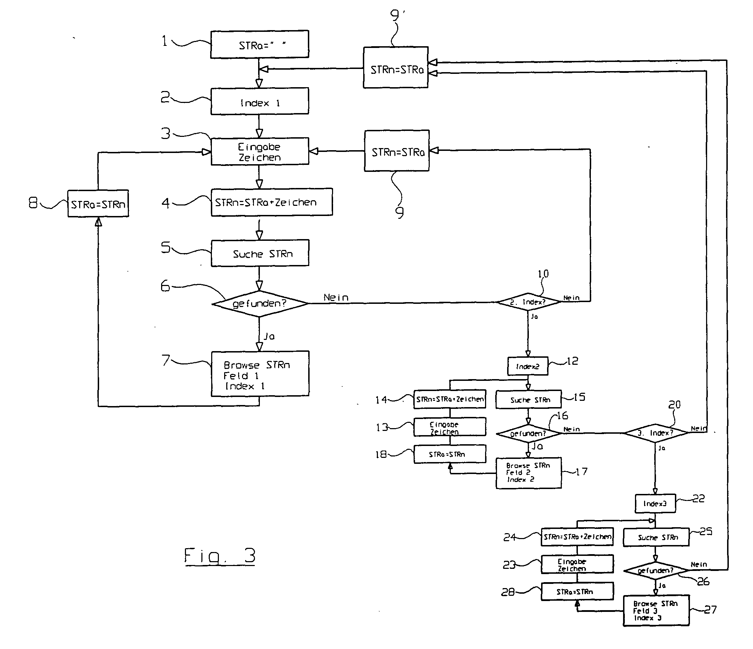

In Fig. 3 ist das Verfahren nach Fig. 2 mit der Index-Fortschaltung detaillierter dargestellt. Wird beim ersten Index kein Datensatz gefunden (Schritt 6), geht das Verfahren über die Prüfung der Index-Weiterschaltung in Schritt 10 zu Schritt 12, in welchem der zweite Index aktiviert wird, worauf dann die Schleife der Schritte 15, 16, 17, 18, 13 und 14 durchlaufen wird, die den Schritten 5, 6, 7, 8, 3 und 4 entspricht. Wird auch beim zweiten Index kein passender Datensatz gefunden, so geht das Verfahren von Schritt 16 zur Prüfung auf eine Umschaltung zum dritten Index (Schritt 20), worauf dann in analoger Wiese die Schritte 22, 25, 26, 27, 28, 23 und 24 durchlaufen werden, die den Schritten 2, 5, 6, 7, 8, 3 und 4 entsprechen.

Wird in Schritt 20 die Fortschaltung auf den dritten Index abgelehnt oder im Schritt 23 festgestellt, daß auch beim dritten Index kein übereinstimmender Datensatz gefunden wurde, so geht das Verfahren zu Schritt 9', wo der aktuelle Suchstring STRn wieder auf den zuvor gehenden Suchstring STRa zurückgesetzt wird. Der Index wird wieder auf den ersten Index zurückgesetzt und das Verfahren beginnt von neuem. Wird in Schritt 10 eine Index-Fortschaltung abgelehnt, so ist noch der Index 1 aktiviert, so daß nach Rücksetzung des Suchstrings STRn auf den zuvor gehenden Wert STRa über den Schritt 9 sofort zur Eingabe eines Zeichens in Schritt 3 zurückgegangen werden kann, ohne daß Schritt 2 der erneuten Index-Festsetzung durchlaufen werden muß.

Das Verfahren nach der Erfindung eignet sich für alle Arten von Datenbanken, unabhängig von deren Inhalt. Das oben angegebene Beispiel für die Suche von Musiktiteln ist rein exemplarisch. Andere Beispiele können sein: Adressbücher, Telefonbücher, Datenbanken von Buchtiteln, Reiseauskunft von Bahn-, Flug- und Schiffsreisen, Dateien in Computern usw. Dem Fachmann ist klar, daß das Verfahren nach der Erfindung universell anwendbar ist und hinsichtlich des Inhaltes der Datenbank keinerlei Beschränkungen unterliegt.

## Patentansprüche

1. Verfahren zum Suchen von in einer elektronischen Datenbank gespeicherten Datensätzen mit folgenden Schritten:
a) Bilden eines ersten Suchstrings (STRa),
b) Eingeben eines Zeichens (Z),
c) automatisches Bilden eines aktuellen Suchstrings (STRn = STRa + Z) aus dem Zeichen (Z) und einem vorherigen Suchstring (STRa),
d) unmittelbar automatisch darauffolgendes Suchen von Datensätzen, deren Anfangszeichen mit dem aktuellen Suchstring (STRn) übereinstimmen,
e) Anzeigen mindestens einer vorbestimmten Anzahl von Datensätzen, die in Schritt d) gefunden wurden,
f) Setzen des ersten Suchstrings (STRa) auf den aktuellen Suchstring (STRa = STRn), wenn mindestens ein übereinstimmender Datensatz gefunden wurde,
g) rekursives Wiederholen der Schritte b) bis f),
**dadurch gekennzeichnet, daß**
h) das zuletzt eingegebene Zeichen (Z) vom aktuellen Suchstring (STRn) automatisch entfernt wird, wenn die Suche nach Schritt d) keinen übereinstimmenden Datensatz erbracht hat und das Verfahren dann nach Schritt b) fortgeführt wird.

2. Verfahren nach Anspruch 1, bei dem ein Datensatz mindestens zwei indizierte Felder aufweist, **dadurch gekennzeichnet,**
**daß** die Suche nach den Schritten a) bis d) in einem ersten vorbestimmten Feld mit einem ersten Index durchgeführt wird und, wenn in Schritt d) nach Anspruch 1 keine übereinstimmenden Datensätze gefunden werden, automatisch in dem mindestens zweiten Feld mit einem zweiten Index die Suche mit demselben aktuellen Suchstring (STRn) wiederholt wird.

3. Verfahren nach Anspruch 1 oder 2, **dadurch gekennzeichnet, daß** die Zeichen (Z) ausschließlich numerische Zeichen sind, denen nach einem Code (T9 oder "Vanity-Code") Buchstaben zugeordnet sind, und daß die Suche nach den Schritten c) bis h) nach Patentanspruch 1 für alle diesem numerischen Zeichen (Z) zugeordneten Buchstaben durchgeführt wird.

4. Verfahren nach Anspruch 1 oder 2, **dadurch gekennzeichnet, daß** jedem suchbaren Feld ein zusätzliches Feld zugeordnet ist, in welchem die Daten des zugeordneten Feldes in einem rein numerischen Code gespeichert sind.
